# EUROPEAN PATENT SPECIFICATION

(11) **EP 2 891 018 B1**
(45) Date of publication and mention of the grant of the patent: **03.04.2019**
(21) Application number: 12780121.5
(22) Date of filing: 10.10.2012
(51) Int. Cl.: G05B 19/042

(54) **INTELLIGENT ELECTRONIC DEVICE SUITABLE FOR USE IN SUBSTATION AUTOMATION SYSTEM AND A METHOD OF OPERATING THE SAME**
INTELLIGENTE ELEKTRONISCHE VORRICHTUNG ZUR VERWENDUNG IN EINEM UMSPANNWERK-AUTOMATISIERUNGSSYSTEM UND VERFAHREN ZUM BETRIEB DAVON
DISPOSITIF ÉLECTRONIQUE INTELLIGENT ADAPTÉ À UNE UTILISATION DANS UN SYSTÈME D'AUTOMATISATION DE POSTE ÉLECTRIQUE ET PROCÉDÉ DE FONCTIONNEMENT ASSOCIÉ

(43) Date of publication of application: 08.07.2015
(73) Proprietor: Siemens Aktiengesellschaft, 80333 München (DE)
(72) Inventor: NAGARAJA, K. S., Bangalore 560070 (IN)
(74) Representative: Patentanwaltskanzlei WILHELM & BECK
(86) International application number: PCT/EP2012/069993
(87) International publication number: WO 2014/056530

(56) References cited:
- EP-A1- 2 207 252
- US-A1- 2010 204 948
- US-A1- 2010 256 832
- YI Y H ET AL: "A new-style centralized IED based on IEC 61850", POWER AND ENERGY SOCIETY GENERAL MEETING - CONVERSION AND DELIVERY OF ELECTRICAL ENERGY IN THE 21ST CENTURY, 2008 IEEE, IEEE, PISCATAWAY, NJ, USA, 20 July 2008 (2008-07-20), pages 1-5, XP031304259, ISBN: 978-1-4244-1905-0
- Ralph Mackiewicz: "Introduction to CIM, IEC 61850, and CIM-IEC 61850 Harmonization", , 1 January 2010 (2010-01-01), XP055308125, Retrieved from the Internet: URL:http://www.emmos.org/prevconf/2010/CIM and IEC 61850 Training.pdf [retrieved on 2016-10-06]

## Description

The present invention relates to an intelligent electronic device. In particular, the present invention relates to an intelligent electronic device suitable for use in a substation automation system.

As well known in the art, electrical power systems include primary devices such as electrical lines, bus bars, circuit breakers, transformers and so on, for transmission and distribution of electricity. These primary devices are monitored, controlled, and protected using intelligent electronic devices. Each intelligent electronic device is configured to monitor operational parameters related to corresponding primary device to detect disturbances and deviations therein and also, to perform various control and automation functions.

Conventionally, the primary devices are arranged in individual bays and the secondary devices are arranged to provide a hierarchical control architecture, that is to say that the secondary devices are arranged at different levels such as process-level, bay-level, and station-level. As a result, dedicated intelligent electronic devices are assigned to individual bays. Thus, intelligent electronic devices corresponding to each specific control and/or protection function are replicated multiple times across several bays in a typical substation. Evidently, this not only requires significant capital investments in installing a substation automation system but also undesirably results in increased complexity in terms of control architecture of the substation automation system.

In recent past, International Electrotechnical Commission (IEC) has developed a new standard titled, "communication networks and systems in substations", commonly known as IEC 61850, which prescribes standardized communication between various secondary devices in an electrical substation. IEC 61850 defines a format to publish measurement data from current or voltage sensors in the form of multicast messages on an industrial Ethernet. Thus, measurement data from individual bays can be transmitted over an inter-bay process bus, and thereby, making such measurement data available to intelligent electronic devices in neighbouring bays.

Evidently, IEC 61850 has led to emergence of a new concept of digital substations, which in turn, led to rise of new possibilities in design of a substation automation system.

As the state of the art migrates towards a more integrated design of substation automation system, there is a need to redesign architecture of intelligent electronic devices such that the new-age intelligent electronic devices are capable of harnessing full potential of digital substations of the future.

YI Y H ET AL: "A new-style centralized IED based an IEC 61850", POWER AND ENERGY SOCIETY GENERAL MEETING -CONVERSION AND DELIVERY OF ELECTRICAL ENERGY IN THE 21ST CENTURY, 2008 IEEE, IEEE, PISCATAWAY, NJ, USA, 20 July 2008 (2008-07-20), p. 1-5 teaches the features of the first part of claim 1. Further prior art is disclosed in EP 2 207 252 A1, US 2010/204948 A1 and US 2010/256832 A1.. Furthermore, Ralph Mackiewicz et al., "Introduction to CIM, IEC 61850, and CIM-IEC 61850 Harmonization", 2010, XP055308125 teaches an overview of use of IEC 61850 protocol in configuration of an intelligent electronic device.

Accordingly, the object of the present invention is to provide a new architecture of intelligent electronic devices such that capital investments required for setting up a substation automation system is reduced, and a design complexity thereof is reduced.

The object of the present invention is achieved by an intelligent electronic device suitable for use in a substation automation system according to claim 1 and a method for operating an intelligent electronic device suitable for use in a substation automation system according to claim 7. Further embodiments of the present invention are addressed in the dependent claims.

The underlying idea of the present invention is provide an intelligent electronic device and a method for operating the same such that a single intelligent electronic device is capable of providing necessary control and/or protection function for multiple bays in a substation, and thereby, replace multiple conventional intelligent electronic devices corresponding to one or more selected set of control and/or protection functions installed in individual bays with a single intelligent electronic device of the present invention. In order to achieve the resulting increased workload, the present invention provides a novel architecture of intelligent electronic device and a method of operating the same.

In a first aspect of the present invention, an intelligent electronic device suitable for use in a substation automation, as defined in claim 1, is provided. The intelligent electronic device includes a multi-device interface, a device façade, and a processing module. The multi-device interface is configured for receiving measurement data generated from a plurality of sensing devices and/or for transmitting control data to a plurality of actuating devices. The device façade is configured for operating a plurality of virtual machines. Each virtual machine instantiates a proxy device; and each individual proxy device is assigned a unique device identity. The processing module is configured for instantiating a master device, wherein the master device comprises a set of functions and/or a set of attributes, wherein at least one of the set of functions and/or the set of attributes is referenced to in at least one of the proxy devices.

In a second aspect of the present invention, a method for operating an intelligent electronic device suitable for use in a substation automation system, as defined in claim 6, is provided. At a first step, a plurality of virtual machines is operated. Each virtual machine instantiates a proxy device, each of these proxy devices is assigned a unique device identity. Further, a master device is instantiated, wherein the master device includes a set of functions and/or a set of attributes, and at least one the set of functions and/or set of attributes is referenced to in at least one of the proxy devices. Finally, measurement data generated from at least one sensing devices is received and routed to a corresponding proxy device, and/or control data from individual proxy devices is transmitted to at least one actuating device corresponding to the proxy device.

Thus, the present invention provides an intelligent electronic device suitable for use in a substation automation system and a method for operating the same.

The intelligent electronic device of the present invention is capable of providing necessary control and/or protection function for multiple bays in a substation. Thus, the present invention facilitates replacing multiple conventional intelligent electronic devices installed in individual bays in a substation automation system with a single intelligent electronic device.

The intelligent electronic device of the present invention harnesses new communication standard IEC 61850 to facilitate reduction in number of intelligent electronic devices typically required in a substation automation system based on conventional techniques. Thus, the present invention facilitates reduction in capital investments required for installing a substation automation system. At the same time, the present invention facilitates a simplified architecture of the substation automation system by way of obviating elaborate design and inter-bay connections for ensuring redundancy.

The present invention is further described hereinafter with reference to illustrated embodiments shown in the accompanying drawings, in which:
- FIG 1: illustrates a schematic representation of a substation automation system comprising an intelligent electronic device in accordance with an embodiment of the present invention,
- FIG 2: illustrates a schematic representation of a set of proxy devices and a master device in accordance with an embodiment of the present invention, and
- FIG 3: illustrates a flowchart depicting a method for operating an intelligent electronic device in a substation automation system in accordance with an embodiment of the present invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

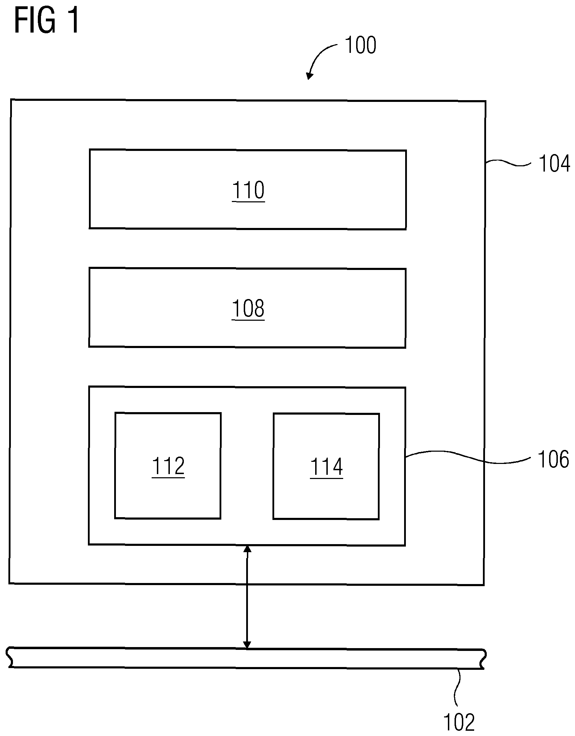

Referring now to FIG 1, a schematic representation of a substation automation system 100 comprising an intelligent electronic device 104 is illustrated in accordance with an embodiment of the present invention.

As explained in the preceding description, a typical electric power system and in particular, a substation includes a set of primary devices such as electrical lines, bus bars, circuit breakers, transformers and so on, for transmission and distribution of electricity. These primary devices are monitored, controlled, and protected using a set of secondary devices, which collectively form the substation automation system 100.

The substation automation system 100 includes a set of sensing device (not shown in FIG 1) and a set of actuating devices (not shown in FIG 1). These sensing and actuating devices directly interface with the primary devices within the substation.

In addition, the substation automation system 100 includes a process bus 102 and one or more intelligent electronic devices 104. In the adjoining figure, only one intelligent electronic device 104 is depicted but in practice as many intelligent electronic devices 104 may be included as desired depending on size of substation and in particular, number of primary devices to be controlled and protected, and number of control and/or protection functions to be implemented.

Various sensing devices such as potential transformers, current transformers, transducers, and so on, measure process values to generate measurement data. These sensing devices feed the measurement data to a transmission channel shown in the adjoining figure as the process bus 102. The actuating devices receive control signals over the process bus 102 and based on these control signals control an operating state of one or more primary devices.

The intelligent electronic device 104 is configured to determine operational state of one or more primary devices based on measurement data received from sensing devices. The intelligent electronic device 104 processes the measurement data in accordance with predefined logic. Based on the measurement data and the predefined logic, the intelligent electronic device 104 transmits one or more control signals to the actuating devices in order to perform one or more control and automation functions.

In conventional techniques, each intelligent electronic device 104 is configurable based on a device configuration file which includes, among other things, definition of various parameters, data types, logical devices, and logical nodes. In accordance with IEC 61850, such device configuration file is an intelligent electronic device capability description (ICD) file based on substation configuration language (SCL). However, the present invention is not limited to such specification and may be implemented in accordance with any suitable standards that currently exist or that may emerge in future.

In accordance with various embodiments of the present invention, individual device configuration files of individual intelligent electronic devices 104 are individually parsed and the configuration information contained therein is classified to generate an individual proxy device configuration file and a master device configuration file. Various common logical nodes and parameters are stored into the master device configuration file, while device-specific information is retained in the proxy device configuration file corresponding to the intelligent electronic device 104.

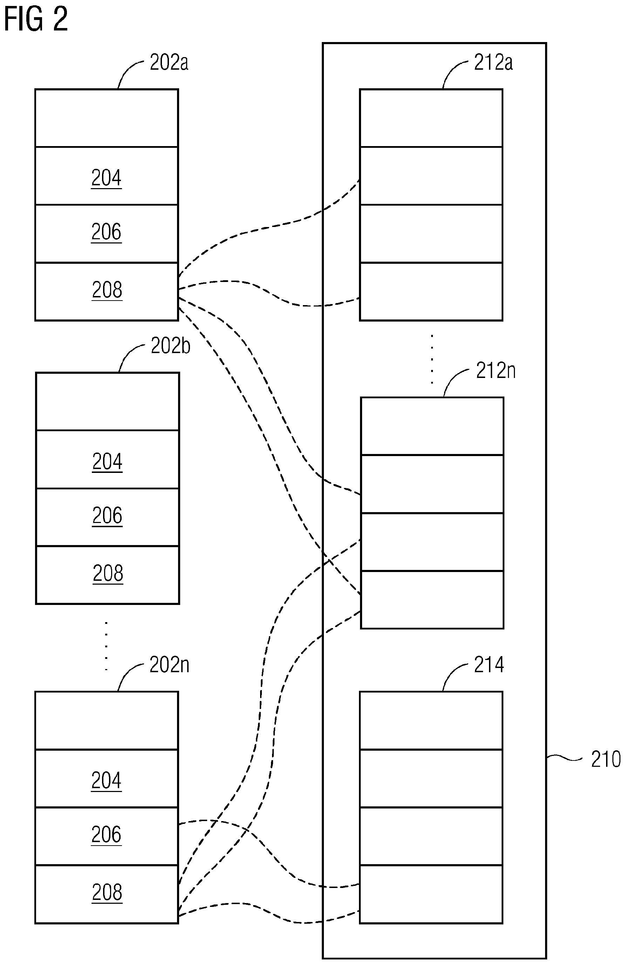

While generating the proxy and the master device configuration files, information related to multiplicity of various protection functions to be implemented through individual intelligent electronic devices 104 is also determined. The structure of proxy and master devices instantiated based on proxy and master device configuration files shall become more readily understood with reference to FIG 2.

Referring now to FIG 2, schematic representations of a set of proxy devices 202a through 202n and a master device 210 are illustrated in accordance with an embodiment of the present invention.

Each proxy device 202 includes an input/output mapping module 204 which includes routing information related to relevant input measurement data received from one or more selected sensing devices, and further related to one or more selected actuating devices to which control data should be transmitted.

Further, each proxy device 202 includes a routing module 206 which contains information related to routing measurement and control data within the substation automation system 100, and in particular, between the proxy and master devices that are instantiated based on the corresponding proxy and master device configuration files.

Each proxy device 202 further includes a reference module 208. The reference module 208 includes information related to references to at least one set of functions and/or set of attributes defined within the master device 210.

The master device 210 includes several individual logical nodes 212a through 212n and a common logical node 214. Each of these nodes includes specification related to a set of functions and/or a set of attributes. As described earlier, one or more of these set of functions and/or set of attributes are referenced to in one or more proxy devices 202. These references from the proxy devices 202 to the master device 210 are depicted through a set of dotted lines extending from the proxy devices 202 to logical modules 212 and common logical module 214 within the master device 210 in the adjoining figure. Each of the logical nodes 212 and 214 in the master device 210 also includes information related to protection application which is implemented there through.

Referring back to FIG 1, the intelligent electronic device 104 includes a multi-device interface 106, a device façade 108, and a processing module 110.

The multi-device interface 106 is configured for receiving measurement data generated from a plurality of sensing devices. Further, the multi-device interface 106 is configured for transmitting control data to a plurality of actuating devices. In one embodiment of the present invention, the multi-device interface 106 includes a multiplexer unit 112 and a demultiplexer unit 114 for receiving measurement data and transmitting the control data respectively.

The device façade 108 is configured for initializing and operating multiple virtual machines. Each virtual machine, in turn, instantiates a proxy device 202 based on an individual proxy device configuration file. Each of proxy devices 202 is assigned a unique device identity for facilitating communication over a communication channel within the substation automation system 100. In one embodiment of the present invention, said device façade 108 operates multiple virtual machines based on hardware-assisted virtualization. However, it should be noted that individual virtual machines operated within the device façade 108 may be instantiated in accordance with any suitable virtualization technique known in the art.

The processing module 110 is configured for instantiating a master device 210 based on the master device configuration file. Thus, the master device 210 includes a set of functions and/or a set of attributes, which are referenced to in one or more proxy devices 202 instantiated in individual virtual machines within the device façade 108, as described in conjunction with FIG 2. It should be noted that multiple instances of individual logical modules corresponding to an individual control and/or protection function is instantiated based on multiplicity information corresponding thereto.

As explained earlier, each proxy device 202 includes an input/output mapping module 204 such that measurement data received from one or more selected sensing devices at said multi-device interface 106 is routed to corresponding one of said proxy devices 202, and further such that control data from each of said proxy device 202 is transmitted to corresponding one or more selected actuating devices.

Further, as explained earlier, the individual proxy devices 202 also include a reference module 208 such that one or more functions within logical nodes 212 and 214 can be invoked from the proxy devices 202. Also, the proxy devices 202 can read and write to one or more attributes in said master device 212.

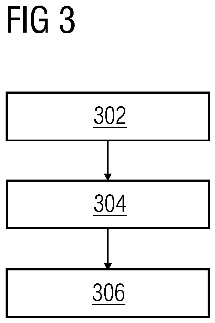

According to the present invention, the device façade 108 is configured to assign differential priority levels to individual proxy devices 202 based on value of measurement data received therein. For example, in case a process value being monitored by an individual proxy device 202 undergoes a disturbance beyond a specified threshold, such proxy device 202 is provided a higher priority such that the required protective control signal is generated on priority. Referring now to FIG 3, a flowchart depicting a method for operating an intelligent electronic device in a substation automation system is illustrated in accordance with an embodiment of the present invention.

At step 302, operation of a plurality of virtual machines is initialized. Each virtual machine instantiates a proxy device. Each of these proxy devices is assigned a unique device identity to facilitate communication over a communication channel within the substation automation system.

At step 304, a master device is instantiated. The master device includes a set of functions and/or a set of attributes, and at least one the set of functions and/or the set of attributes is referenced to in at least one of the proxy devices.

At step 306, measurement data generated from at least one sensing devices is received. The measurement data is routed to a corresponding proxy device. Alternatively, at this step, control data from one of the proxy devices is transmitted to at least one actuating device corresponding to the proxy device.

During this step, one or more proxy devices invoke one or more set of functions and/or set of attributes in the master device. Further, at this step, a priority level is assigned to one or more said proxy devices, and a proxy device with higher priority is allowed to generate protective control signals through access to the master device in preference to another proxy device with a lower priority.

Thus, the intelligent electronic device of the present invention harnesses new communication standard IEC 61850 to facilitate reduction in number of intelligent electronic devices typically required in a substation automation system based on conventional techniques. Therefore, the present invention not only facilitates reduction in capital investments required for installing a substation automation system but also facilitates a simplified architecture of the substation automation system by way of obviating elaborate design and inter-bay connections for ensuring redundancy. While the present invention has been described in detail with reference to certain embodiments, it should be appreciated that the present invention is not limited to those embodiments. In view of the present disclosure, many modifications and variations would present themselves, to those of skill in the art without departing from the scope of this invention. The scope of the present invention is, therefore, indicated by the following claims rather than by the foregoing description. All changes, modifications, and variations coming within the meaning and range of equivalency of the claims are to be considered within their scope.

## Claims

1. An intelligent electronic device (104) suitable for use in a substation automation system (100), said intelligent electronic device (104) comprising:
- a multi-device interface (106), said multi-device interface (106) configured for receiving measurement data generated from a plurality of sensing devices and for transmitting control data to a plurality of actuating devices,
- a device façade (108), said device façade (108) configured for operating a plurality of virtual machines, wherein each virtual machine instantiates a proxy device (202), wherein each of said proxy devices (202) is assigned a unique device identity, and
- a processing module (110), the processing module (110), configured for instantiating a master device (210), wherein said master device (210) comprises a set of functions and/or a set of attributes, wherein at least one said set of functions and/or the set of attributes is referenced to in at least one of said proxy devices (202), whereby the master device (210) includes several individual logical nodes (212a - 212n) and a common logical node (214), each of these nodes includes specification related to a set of functions and/or a set of attributes, wherein each proxy device (202) comprises a reference module (208), said reference module (208) comprising a reference to at least one said set of functions and/or a set attributes in said several individual logical nodes (212a - 212n) and said common logical node (214) of said master device (210),
**characterised in that** said device façade (108) is configured to assign a priority level to one or more said proxy devices (202) based on said measurement data.

2. The intelligent electronic device (104) according to claim 1, wherein the multi-device interface (106) comprises a multiplexer unit (112) and a demultiplexer unit (114).

3. The intelligent electronic device (104) according to any of the preceding claims, wherein each proxy device (202) comprises an input/output mapping module (204) such that measurement data received from one or more selected sensing devices at said multi-device interface (106) is routed to corresponding one of said proxy devices (202), and further such that control data from each of said proxy device (202) is transmitted to corresponding one or more selected actuating devices.

4. The intelligent electronic device (104) according to any of the preceding claims, wherein each proxy device (202) comprises a routing module (206), the routing module comprising information related to routing measurement and control data within the substation automation system (100).

5. The intelligent electronic device (104) according to any of the preceding claims, wherein said device façade (108) operates said plurality of virtual machines based on hardware-assisted virtualization.

6. A method for operating an intelligent electronic device (104) suitable for use in a substation automation system (100), the method comprising:
- operating (302) a plurality of virtual machines, each virtual machine instantiating a proxy device (202), wherein said proxy device (202) is assigned a unique device identity,
- instantiating (304) a master device (210), wherein said master device (210) comprises a set of functions and/or a set of attributes, wherein at least one said set of functions and/or set of attributes is referenced to in at least one of said proxy devices (202), and
- receiving (306) measurement data generated from at least one sensing devices and routing said measurement data to a corresponding proxy device (202) and transmitting (306) control data from one of said proxy devices (202) to at least one actuating device corresponding to said one of proxy devices (202) whereby the master device (210) includes several individual logical nodes (212a - 212n) and a common logical node (214), each of these nodes includes specification related to a set of functions and/or a set of attributes, wherein each proxy device (202) comprises a reference module (208), said reference module (208) comprising a reference to at least one said set of functions and/or a set attributes in said several individual logical nodes (212a - 212n) and said common logical node (214) of said master device (210),
**characterised by**
assigning a priority level to one or more said proxy devices (202) based on said measurement data.

## Patentansprüche

1. Intelligente elektronische Vorrichtung (104) zur Verwendung in einem Umspannwerk-Automatisierungssystem (100), wobei die intelligente elektronische Vorrichtung (104) Folgendes umfasst:
- eine Mehrfachvorrichtungsschnittstelle (106), wobei die Mehrfachvorrichtungsschnittstelle (106) dazu ausgelegt ist, von mehreren Erfassungsvorrichtungen erzeugte Messdaten zu empfangen und Steuerdaten an mehrere Betätigungsvorrichtungen zu senden,
- eine Vorrichtungsvorderseite (108), wobei die Vorrichtungsvorderseite (108) dazu ausgelegt ist, mehrere virtuelle Maschinen zu betreiben, wobei jede virtuelle Maschine eine Proxy-Vorrichtung (202) instanziiert, wobei jeder der Proxy-Vorrichtungen (202) eine eindeutige Vorrichtungsidentität zugewiesen ist, und
- ein Verarbeitungsmodul (110), wobei das Verarbeitungsmodul (110) dazu ausgelegt ist, eine Mastervorrichtung (210) zu instanziieren, wobei die Mastervorrichtung (210) eine Menge von Funktionen und/oder eine Menge von Attributen umfasst, wobei zumindest die Menge von Funktionen und/oder die Menge von Attributen in zumindest einer der Proxy-Vorrichtungen (202) referenziert wird, wobei
die Mastervorrichtung (210) mehrere einzelne logische Knoten (212a-212n) und einen gemeinsamen logischen Knoten (214) umfasst, wobei jeder dieser Knoten eine Spezifikation bezüglich einer Menge von Funktionen und/oder einer Menge von Attributen umfasst, wobei jede Proxy-Vorrichtung (202) ein Referenzmodul (208) umfasst, wobei das Referenzmodul (208) eine Referenz auf zumindest die Menge von Funktionen und/oder die Menge von Attributen in den mehreren individuellen logischen Knoten (212a-212n) und dem gemeinsamen logischen Knoten (214) der Mastervorrichtung (210) umfasst,
**dadurch gekennzeichnet, dass**
die Vorrichtungsvorderseite (108) dazu ausgelegt ist, einer oder mehreren der Proxy-Vorrichtungen (202) basierend auf den Messdaten ein Prioritätsniveau zuzuweisen.

2. Intelligente elektronische Vorrichtung (104) nach Anspruch 1, wobei die Mehrfachvorrichtungsschnittstelle (106) eine Multiplexereinheit (112) und eine Demultiplexereinheit (114) umfasst.

3. Intelligente elektronische Vorrichtung (104) nach einem der vorhergehenden Ansprüche, wobei jede Proxy-Vorrichtung (202) ein Eingang/Ausgang-Abbildungsmodul (204) umfasst, sodass von einer oder mehreren ausgewählten Erfassungsvorrichtungen an der Mehrfachvorrichtungsschnittstelle (106) empfangene Messdaten an eine entsprechende der Proxy-Vorrichtungen (202) weitergeleitet werden, und ferner so, dass Steuerdaten von jeder der Proxy-Vorrichtungen (202) an die entsprechenden eine oder mehreren Betätigungsvorrichtungen gesendet werden.

4. Intelligente elektronische Vorrichtung (104) nach einem der vorhergehenden Ansprüche, wobei jede Proxy-Vorrichtung (202) ein Weiterleitungsmodul (206) umfasst, wobei das Weiterleitungsmodul Informationen bezüglich des Weiterleitens von Mess- und Steuerdaten innerhalb des Umspannwerk-Automatisierungssystems (100) umfasst.

5. Intelligente elektronische Vorrichtung (104) nach einem der vorhergehenden Ansprüche, wobei die Vorrichtungsvorderseite (108) die mehreren virtuellen Maschinen basierend auf hardwareunterstützter Virtualisierung betreibt.

6. Verfahren zum Betreiben einer intelligenten elektronischen Vorrichtung (104) zur Verwendung in einem Umspannwerk-Automatisierungssystem (100), wobei das Verfahren Folgendes umfasst:
- Betreiben (302) mehrerer virtueller Maschinen, wobei jede virtuelle Maschine eine Proxy-Vorrichtung (202) instanziiert, wobei der Proxy-Vorrichtung (202) eine eindeutige Vorrichtungsidentität zugewiesen ist,
- Instanziieren (304) einer Mastervorrichtung (210), wobei die Mastervorrichtung (210) eine Menge von Funktionen und/oder eine Menge von Attributen umfasst, wobei zumindest die Menge von Funktionen und/oder die Menge von Attributen in zumindest einer der Proxy-Vorrichtungen (202) referenziert wird, und
- Empfangen (306) von von zumindest einer Erfassungsvorrichtung erzeugten Messdaten und Weiterleiten der Messdaten an eine entsprechende Proxy-Vorrichtung (202) und Senden (306) von Steuerdaten von einer der Proxy-Vorrichtungen (202) an zumindest eine Betätigungsvorrichtung entsprechend der einen der Proxy-Vorrichtungen (202)
wobei
die Mastervorrichtung (210) mehrere einzelne logische Knoten (212a-212n) und einen gemeinsamen logischen Knoten (214) umfasst, wobei jeder dieser Knoten eine Spezifikation bezüglich einer Menge von Funktionen und/oder einer Menge von Attributen umfasst, wobei jede Proxy-Vorrichtung (202) ein Referenzmodul (208) umfasst, wobei das Referenzmodul (208) eine Referenz auf zumindest die Menge von Funktionen und/oder die Menge von Attributen in den mehreren individuellen logischen Knoten (212a-212n) und dem gemeinsamen logischen Knoten (214) der Mastervorrichtung (210) umfasst,
**gekennzeichnet durch**:
Zuweisen eines Prioritätsniveaus zu einer oder mehreren der Proxy-Vorrichtungen (202) basierend auf den Messdaten.

## Revendications

1. Dispositif électronique intelligent (104) convenant pour être utilisé dans un système d'automatisation de sous-station (100), ledit dispositif électronique intelligent (104) comprenant :
- une interface multidispositif (106), ladite interface multidispositif (106) étant configurée pour recevoir des données de mesure générées par une pluralité de dispositifs de détection et pour transmettre des données de commande à une pluralité de dispositifs d'actionnement,
- une façade de dispositif (108), ladite façade de dispositif (108) étant configurée pour exploiter une pluralité de machines virtuelles, dans lequel chaque machine virtuelle instancie un dispositif serveur mandataire (202), dans lequel à chacun desdits dispositifs serveurs mandataires (202) est assignée une identité de dispositif unique, et
- un module de traitement (110), le module de traitement (110) étant configuré pour instancier un dispositif maître (210), dans lequel ledit dispositif maître (210) comprend un jeu de fonctions et/ou un jeu d'attributs, dans lequel il est fait référence à au moins l'un dudit jeu de fonctions et/ou dudit jeu d'attributs dans au moins l'un desdits dispositifs serveurs mandataires (202),
moyennant quoi
le dispositif maître (210) inclut plusieurs noeuds logiques individuels (212a à 212n) et un noeud logique commun (214), chacun de ces noeuds inclut une spécification relative à un jeu de fonctions et/ou un jeu d'attributs, dans lequel chaque dispositif serveur mandataire (202) comprend un module de référence (208), ledit module de référence (208) comprenant une référence à au moins un dit jeu de fonctions et/ou un jeu d'attributs dans lesdits plusieurs noeuds logiques individuels (212a à 212n) et ledit noeud logique commun (214) dudit dispositif maître (210),
**caractérisé en ce que**
ladite façade de dispositif (108) est configurée pour assigner un niveau de priorité à un ou plusieurs dispositifs serveurs mandataires (202) sur la base desdites données de mesure.

2. Dispositif électronique intelligent (104) selon la revendication 1, dans lequel l'interface multidispositif (106) comprend une unité de multiplexeur (112) et une unité de démultiplexeur (114).

3. Dispositif électronique intelligent (104) selon l'une quelconque des revendications précédentes, dans lequel chaque dispositif serveur mandataire (202) comprend un module de mise en correspondance entrée/sortie (204) de sorte que des données de mesure reçues en provenance d'un ou de plusieurs dispositifs de détection sélectionnés au niveau de ladite interface multidispositif (106) soient routées vers l'un correspondant desdits dispositifs serveurs mandataires (202), et en outre de sorte que des données de commande provenant de chacun desdits dispositifs serveurs mandataires (202) soient transmises à un ou plusieurs dispositifs d'actionnement sélectionnés correspondants.

4. Dispositif électronique intelligent (104) selon l'une quelconque des revendications précédentes, dans lequel chaque dispositif serveur mandataire (202) comprend un module de routage (206), le module de routage comprenant des informations relatives à des données de mesure et de commande de routage au sein du système d'automatisation de sous-station (100).

5. Dispositif électronique intelligent (104) selon l'une quelconque des revendications précédentes, dans lequel ladite façade de dispositif (108) exploite ladite pluralité de machines virtuelles sur la base d'une virtualisation assistée par matériel.

6. Procédé d'exploitation d'un dispositif électronique intelligent (104) convenant pour être utilisé dans un système d'automatisation de sous-station (100), le procédé comprenant :
- l'exploitation (302) d'une pluralité de machines virtuelles, chaque machine virtuelle instanciant un dispositif serveur mandataire (202), dans lequel audit dispositif serveur mandataire (202) est assignée une identité de dispositif unique,
- l'instanciation (304) d'un dispositif maître (210), dans lequel ledit dispositif maître (210) comprend un jeu de fonctions et/ou un jeu d'attributs, dans lequel il est fait référence à au moins un dit jeu de fonctions et/ou un dit jeu d'attributs dans au moins l'un desdits dispositifs serveurs mandataires (202), et
- la réception (306) de données de mesure générées par au moins un dispositif de détection et le routage desdites données de mesure vers un dispositif serveur mandataire correspondant (202) et la transmission (306) de données de commande depuis l'un desdits dispositifs serveurs mandataires (202) à au moins un dispositif d'actionnement correspondant audit un des dispositifs serveurs mandataires (202)
moyennant quoi
le dispositif maître (210) inclut plusieurs noeuds logiques individuels (212a à 212n) et un noeud logique commun (214), chacun de ces noeuds inclut une spécification relative à un jeu de fonctions et/ou un jeu d'attributs, dans lequel chaque dispositif serveur mandataire (202) comprend un module de référence (208), ledit module de référence (208) comprend une référence à au moins un dit jeu de fonctions et/ou un jeu d'attributs dans lesdits plusieurs noeuds logiques individuels (212a à 212n) et ledit noeud logique commun (214) dudit dispositif maître (210),
**caractérisé par**
le fait d'assigner un niveau de priorité à un ou plusieurs desdits dispositifs serveurs mandataires (202) sur la base desdites données de mesure.
